# EUROPÄISCHE PATENTSCHRIFT

(11) **EP 1 966 012 B1**
(45) Veröffentlichungstag und Bekanntmachung des Hinweises auf die Patenterteilung: **18.01.2012**
(21) Anmeldenummer: 06807725.4
(22) Anmeldetag: 03.11.2006
(51) Int. Cl.: B60S 1/34

(54) **BEFESTIGUNGSVORRICHTUNG**
FASTENING APPARATUS
DISPOSITIF DE FIXATION

(30) Priorität: 20.12.2005 DE 102005060865
(43) Veröffentlichungstag der Anmeldung: 10.09.2008
(73) Patentinhaber: ROBERT BOSCH GMBH, 70442 Stuttgart (DE)
(72) Erfinder: BOOS, Tino, 76532 Baden-Baden (DE); ESCHENBRENNER, Nicolas, F-67100 Strasbourg (FR)
(86) Internationale Anmeldenummer: PCT/EP2006/068055
(87) Internationale Veröffentlichungsnummer: WO 2007/071490

(56) Entgegenhaltungen:
- DE-C- 489 616
- FR-A- 1 226 503
- FR-A- 2 086 560
- FR-A1- 2 785 248
- GB-A- 613 795
- US-A- 1 852 779

## Beschreibung

Die vorliegende Erfindung betrifft eine Vorrichtung zum Befestigen eines Scheibenwischerhebels mit einer Antriebswelle.

Herkömmlicherweise wird ein Scheibenwischerhebel für ein Kraftfahrzeug, mit einer Durchgangsöffnung für die Welle, auf der Welle mittels einer Mutter gesichert bzw. gekontert, die auf ein an der Welle befindliches Gewinde geschraubt wird. Die Welle kann an ihrem einen Ende auch konisch ausgebildet sein, wobei der Hebel gegen den Konus gepresst. Die Preßhalterung verhindert eine Rotation von Hebel und Welle gegeneinander.

Eine solche Befestigung hat jedoch den Nachteil, dass es relativ aufwendig ist, den Hebel an der Welle mittels einer Verschraubung zu befestigen. Ebenso ist es schwierig, den Hebel wieder von der Welle zu lösen. Außerdem wird als nachteilig empfunden, dass eine genaue Positionierung von Welle und Hebel zueinander relativ schwer zu erzielen ist.

Aus GB 613795 ist eine Scheibenwischvorrichtung mit einem Scheibenwischerhebel und einer Antriebswelle bekannt, wobei die Antriebswelle durch eine Öffnung des Scheibenwischerhebels geführt ist. Die Antriebswelle und der Scheibenwischerhebel weisen jeweils Ausnehmungen auf, in die zwei Enden einer Feder eingreifen. Damit ist eine formschlüssige Verbindung zwischen dem Scheibenwischerhebel und der Antriebswelle hergestellt.

Ziel der vorliegenden Erfindung ist es, eine verbesserte Vorrichtung zum Befestigen eines Scheibenwischerhebels auf einer Welle bereitzustellen.

Diese Aufgabe wird durch die Merkmale des Anspruchs 1 gelöst.

Vorteilhafte Ausgestaltungen der Erfindung sind in den Unteransprüchen angegeben.

Die erfindungsgemäße Vorrichtung zum Befestigen eines Scheibenwischerhebels mit einer Antriebswelle umfasst ein Klemmglied zum Verbinden des Hebels mit der Welle, wobei der Hebel eine Durchgangsöffnung aufweist, wobei die Welle sich durch die Durchgangsöffnung hindurch erstreckt, wobei das Klemmglied zwischen einem Innenrandbereich einer Ausnehmung des Hebels und der Welle angeordnet ist, wobei das Klemmglied ein erstes Ende und ein zweites Ende aufweist, wobei das Klemmglied derart betätigbar ist, dass es eine erste Position und einen verspannten Zustand annehmen kann, wobei das zweite Ende des Klemmglieds mit dem Innenrandbereich des Hebels gekoppelt ist, wobei das Klemmglied im verspannten Zustand in der Ausnehmung angeordnet ist, und wobei in dem verspannten Zustand des Klemmglieds das erste Ende des Klemmglieds in Presskontakt mit der Welle steht und sich das zweite Ende des Klemmglieds am Innenrandbereich des Hebels abstützt.

Das Klemmglied ist derart ausgebildet, dass es bei Betätigung, d.h. bei Ausüben eines Drucks auf das Klemmglied, in Presskontakt mit Welle und Hebel steht. Daraus ergibt sich der Vorteil, dass der Hebel relativ einfach und schnell auf der Welle befestigt ist. Ein weiterer Vorteil ist, dass der Hebel gegenüber der Welle sehr genau positioniert und mit hohem Kraftschluss befestigt werden kann.

In weiterer Ausgestaltung der Erfindung kann das erste Ende des Klemmglieds ein erstes Andruckglied umfassen, welches im betätigten Zustand des Klemmglieds in Presskontakt mit der Welle steht. Durch das Andruckglied ergibt sich der Vorteil, dass das Klemmglied in noch sicherer Weise mit dem Hebel verbunden ist.

In einer anderen Ausgestaltung der Erfindung umfasst das erste Andruckglied eine mit dem Innenrandbereich der Ausnehmung verbundene Exzenter-Achse. Das erste Andruckglied wird um diese Exzenter-Achse derart rotiert, dass es sich mit der Welle verklemmt. Der Vorteil ist, dass die zum Verklemmen benötigte relativ geringe Rotationsbewegung des ersten Andruckglieds eine relativ hohe Kraft auf die Welle ausübt.

In bevorzugter Weise der Erfindung weist die Welle an der Stelle, wo das erste Ende des Klemmglieds gegen die Welle presst, eine Oberflächenbehandlung auf. Somit kann ein Abrutschen des zweiten Endes von der Welle verhindert werden.

In den folgenden Figuren wird die erfindungsgemäße Vorrichtung anhand von Ausführungsbeispielen dargelegt.
Figuren 1 und 2 zeigen verschiedene Ausführungsformen der Erfindung;
Figuren 3 bis 5 und Figur 7 zeigen Ausführungsformen, die nicht beansprucht werden.
Figur 6 zeigt eine Draufsicht auf die in Figur 5 dargestellte Vorrichtung; und
Figur 8 zeigt eine Draufsicht auf die in Figur 7 dargestellte Vorrichtung.

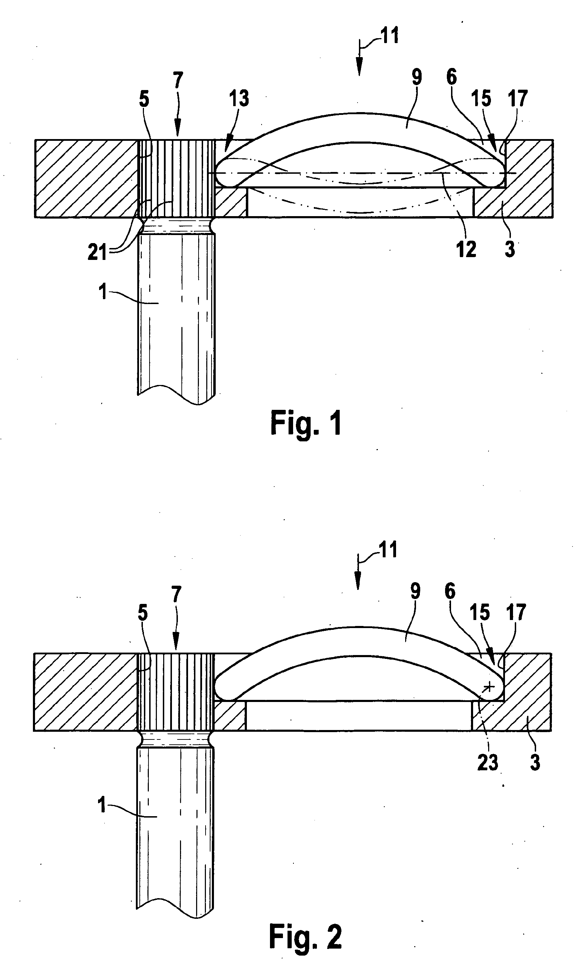

Figur 1 zeigt eine Querschnittsansicht einer Welle 1 und eines Hebels 3 im montierten Zustand. Der Hebel 3 weist zum einen eine Durchgangsöffnung 5 und zum anderen eine Ausnehmung 6 auf, wobei die Durchgangsöffnung 5 sich durch die Ausnehmung 6 hindurch erstreckt. Die Welle 1 ist mit ihrem Ende 7 in der Durchgangsöffnung 5 angeordnet.

In der Ausnehmung 6 ist ein Klemmglied 9 angeordnet, das in Figur 1 mit durchgezogenen Linien in einer ersten Position dargestellt ist. Das Klemmglied 9 weist ein erstes Ende 13 und ein zweites Ende 15 auf. Dabei liegt das erste Ende 13 an der Welle 1 an, und das zweite Ende 15 liegt an einem Innenrandbereich 17 der Durchgangsöffnung 5 an, der einen Anlagebereich darstellt.

Bei dem Klemmglied 9 handelt es sich um ein bogenförmiges Stück Metall, das sich in federnder Weise durch Ausübung einer Kraft in Richtung des Pfeils 11 verformen lässt. Die verformte Position des Klemmglieds 9 ist in Figur 1 mit gestrichelten Linien dargestellt. Das Klemmglied ist in der gestrichelten Position in einem verspannten Zustand, wobei das erste Ende 13 in der Zeichnung nach links gegen die Welle 1 und das zweite Ende 15 in der Zeichnung nach rechts gegen den Innenrandbereich 17 drückt. Somit verklemmt das Klemmglied 9 den Hebel 3 gegenüber der Welle 1. Das Klemmglied 9 verbleibt in der mit Doppelpunkt und Strichen dargestellten Position, d.h. es ist schlussversichert, wenn sich der mittlere Bereich des Klemmglieds 9, auf den die Kraft ausgeübt wird, unterhalb einer gedachten Verbindungslinie zwischen dem ersten Ende 13 und dem zweiten Ende 15, in der Figur 1 mit einer strichpunktierten Linie 12 dargestellt, befindet. Dabei sind die von den Enden 13, 15 her resultierenden auf den mittleren Bereich wirkenden Kräfte in Richtung des Pfeils 11 größer als das Bestreben des Klemmglieds in die dem Pfeil 11 entgegengesetzte Richtung "zurückzuspringen", und zwar aufgrund der federnden Eigenschaften des Materials des Klemmglieds. Das Klemmglied 9 kann durch Ausüben einer Kraft in der entgegengesetzten Richtung des Pfeils 11 wieder gelöst werden, wenn die Kraft größer ist als die in Richtung des Pfeils 11 resultierenden Kräfte.

Die Genauigkeit der Positionierung des Hebels gegenüber der Welle liegt im Bereich von einigen Zehntel Grad, da die von dem ersten Ende 13 des Klemmglieds 9 auf die Welle 1 ausgeübte Kraft im wesentlichen punktuell wirkt, und da während des Verklemmens keine Verdrehung des Hebels gegenüber der Welle, wie z.B. bei einer verschraubten Verbindung, auftritt.

Als Material für das Klemmglied sind auch Nicht-Metalle denkbar. Das Material sollte eine federnde Eigenschaft und eine entsprechende Druck-/ Zug-Festigkeit aufweisen.

Das Ende 7 der Welle 1 weist eine Oberflächenbehandlung auf, wobei die Oberfläche im dargestellten Beispiel mit Furchen 21 versehen ist, um einen höheren Kraftschluss zwischen Hebel 3 und Welle 1 zu erzielen. Es sind aber auch andere Arten einer Oberflächenbehandlung bzw. Oberflächenstruktur denkbar.

In den Beschreibungen zu den folgenden Ausführungsformen werden gleiche Bezugszeichen für die Elemente verwendet, die den in Figur 1 dargestellten Elementen entsprechen.

Figur 2 zeigt eine zweite Ausführungsform der vorliegenden Erfindung, die im wesentlichen der in Figur 1 dargestellten Ausführungsform entspricht. Dabei ist wieder eine Welle 1 mit ihrem Ende 7 in einer Durchgangsöffnung 5 angeordnet. Ebenso ist ein Klemmglied 9 in einer Ausnehmung 6 wie in der in Figur 1 dargestellten Weise angeordnet. Im Unterschied zur Figur 1 ist jedoch das zweite Ende 15 des Klemmglieds 9 mit dem Innenrandbereich 17 mittels einer senkrecht zur Zeichenebene stehenden Achse 23 gekoppelt, wobei der Hebel drehbar an der gelagert ist.

Wie in der ersten Ausführungsform wird eine Kraft in Richtung des Pfeils 11 ausgeübt, so dass sich das Klemmglied 9 in der Zeichnung nach unten verbiegt und sich so gegen Welle 1 und Hebel 3 verklemmt.

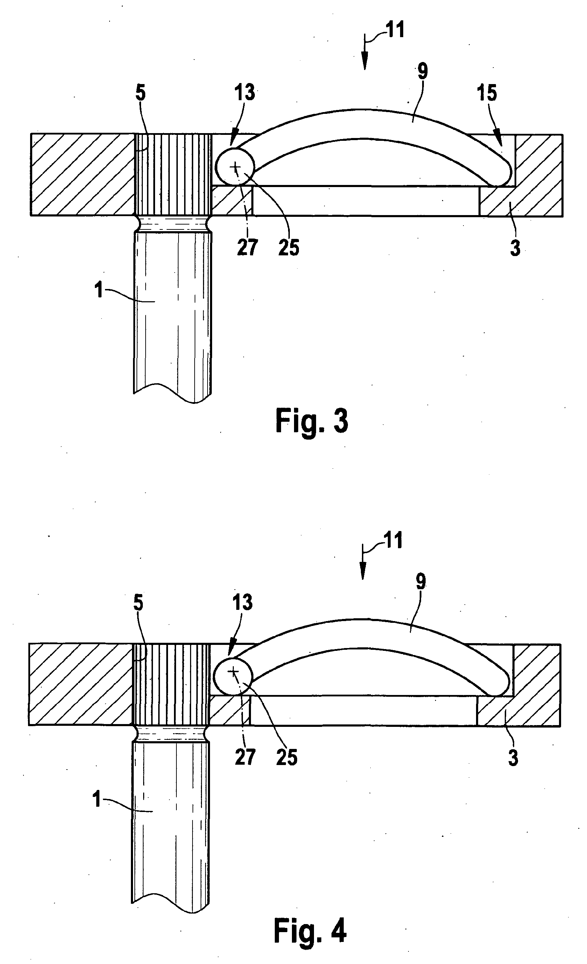

Figur 3 zeigt eine Ausführungsform , die im wesentlichen den zuvor dargestellten Ausführungsformen entspricht, die aber nicht beansprucht wird. Hierbei umfasst das erste Ende 13 ein mit dem zweiten Ende 15 verbundenes Andruckglied 25 in Form einer Rolle. Bei Ausübung einer Kraft in Richtung des Pfeiles 11 auf das Klemmglied 9 verklemmt sich das Klemmglied 9 gegen Welle 1 und Hebel 3, wobei die Welle 1 in der Durchgangsöffnung 5 fixiert ist.

Figur 4 zeigt eine Ausführungsform die im wesentlichen dem Aufbau der in Figur 3 dargestellten Ausführungsform entspricht, die aber nicht beansprucht wird. Der Unterschied besteht hier darin, dass an dem ersten Ende 13 des Klemmglieds 9 das erste Andruckglied 25 eine Rolle ist, die um eine Exzenter-Achse 27 drehbar gelagert ist, wobei die Exzenter-Achse 27 mit dem Hebel 3 verbunden ist. Das erste Ende 13 des Klemmglieds 9 ist derart an dem Andruckglied 25 angebracht, dass bei Kraftausübung in Richtung des Pfeiles 11 auf das Klemmglied 9 das Andruckglied 25 um die Exzenter-Achse 27 gedreht wird. Durch die exzentrische Anordnung wird die Rolle 25 bei der Betätigung des Hebels gegen die Welle 1 gepresst.

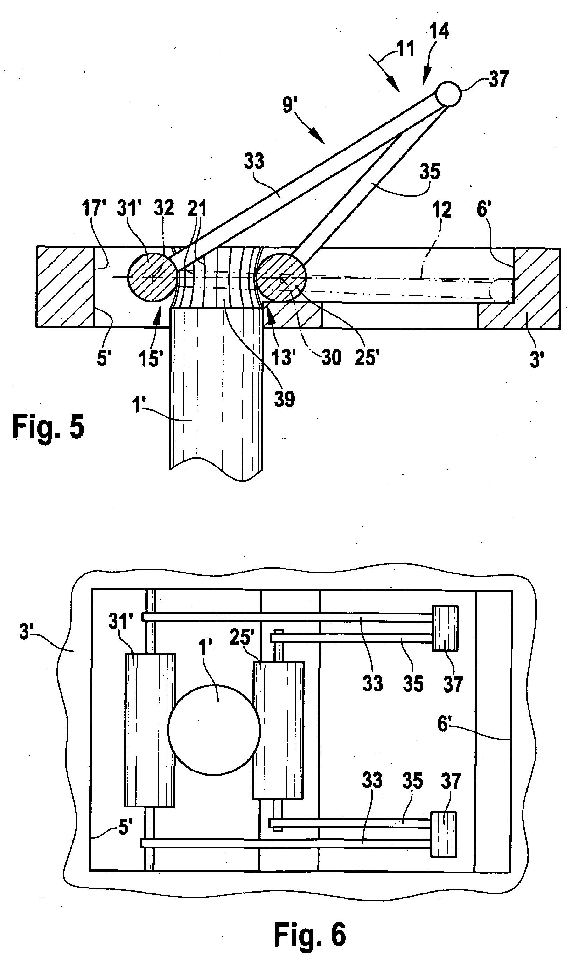

Figur 5 zeigt eine Ausführungsform, die nicht beansprucht wird . Hierbei ist an einem ersten Ende 13' eines Klemmglieds 9' ein erstes Andruckglied 25' und am zweiten Ende 15' eines Klemmglieds 9' ein zweites Andruckglied 31' befestigt. Das zweite Andruckglied 31', im dargestellten Beispiel in Form einer Rolle ausgebildet, weist eine Achse 32 auf, die mit dem Hebel 3 verbunden ist. Das erste Andruckglied 25' ist auch als Rolle ausgebildet, die jedoch nicht mit dem Hebel verbunden ist.

Das Klemmglied 9' besteht im dargestellten Beispiel aus zwei stangenartigen Metall-Gliedern 33 und 35, die über Gelenke 37 miteinander gekoppelt sind. Zum besseren Verständnis zeigt Figur 6 eine Draufsicht auf die in Figur 5 dargestellte Vorrichtung.

Die Welle 1' weist eine mit Furchen 21' ausgebildete Nut 39 auf, in welcher das erste Andruckglied 25' und das zweite Andruckglied 31' anliegen. Es sind auch andere Arten einer Oberflächenbeschaffenheit der Welle 1' denkbar. Die Welle 1' muss jedoch nicht eine solche Nut und/oder eine Oberflächenbehandlung aufweisen.

Bei Betätigung, d.h. bei Ausüben einer Kraft in Richtung des Pfeils 11 auf einen Bereich 14 des Klemmglieds 9', geht das Klemmglied 9' in die in Figur 5 gestrichelte Position über, bei der das Klemmglied 9' verspannt ist. Analog zu dem in Figur 1 beschriebenen Beispiel ist das Klemmglied 9' in der gestrichelten Position schlussversichert, da der mit 14 bezeichnete Bereich des Klemmglieds 9' unterhalb einer gedachten Verbindungslinie zwischen einer Achse 32 des Andruckglieds 31' und einer Achse 30 des Andruckglieds 25' liegt, in der Figur 5 mit einer gestrichelten Linie 12' dargestellt. In dieser schlussversicherten Position drückt das Klemmglied 9' mit seinem ersten Andruckglied 25' gegen die Welle 1'. In der gestrichelten Position werden die Stangen vorzugsweise über Sperrmittel gehalten.

Wie in dem in Figur 5 dargestellten Beispiel können die in den in Figuren 1 bis 4 dargestellten Klemmglieder auch aus zwei mit einem Gelenk verbundenen Gliedern ausgebildet sein.

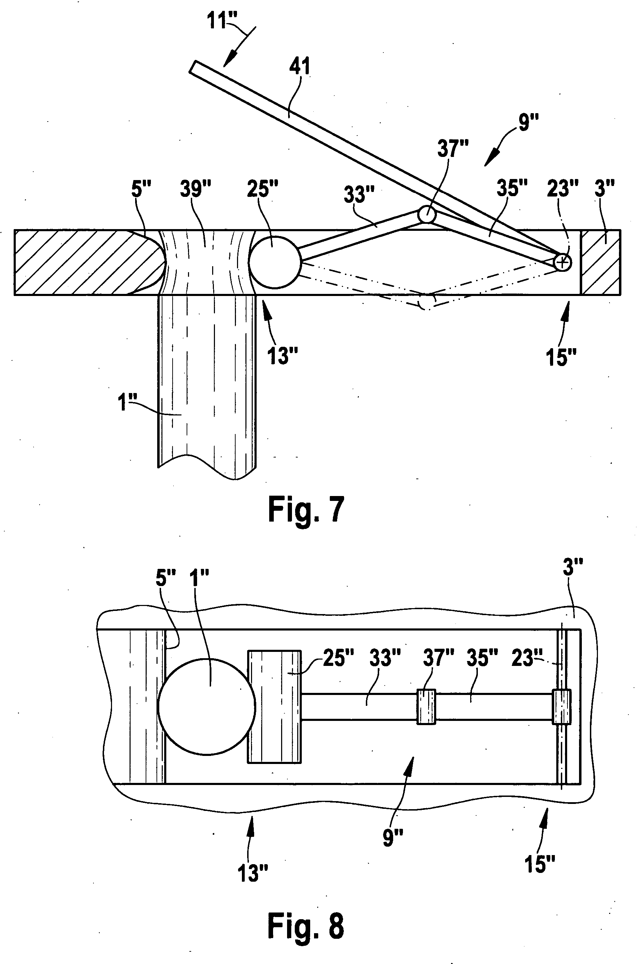

Dies zeigen z.B. Figur 7 und Figur 8, wobei Figur 8 eine Draufsicht auf die in Figur 7 dargestellte Vorrichtung ist.

Mit Bezug auf Figur 7 umfasst das Klemmglied 9" zwei Glieder 33", 35", die über ein Gelenk 37" miteinander verbunden sind. Das Klemmglied 9" weist ein erstes Ende 13" mit einem ersten Andruckglied 25" auf, und ein zweites Ende 15", welches drehbar an dem Hebel 3" über eine Achse 23" gelagert ist. Am zweiten Ende 15" ist an der Achse 23" ein Verschlusshebel 41 drehbar gelagert (in Figur 8 aus Gründen der Übersichtlichkeit nicht dargestellt). Um die in der Durchgangsöffnung 5" angeordnete Welle 1" gegen den Hebel 3" zu verklemmen, wird der Verschlusshebel 41 in Richtung des Pfeils 11" bewegt, wobei die Glieder 33", 35" und das Gelenk 37" in die mit gestrichelten Linien dargestellte Position übergehen. In dieser Position ist das Klemmglied 9" schlussversichert, wobei hinsichtlich der Wirkweise der Schlussversicherung auf die Beschreibung zu Figur 1 verwiesen wird.

Im in Figur 7 dargestellten Beispiel ist die Durchgangsöffnung 5" an der Stelle, wo die Welle 1" anliegt, d.h. in einer Nut 39", in Form eines Andruckglieds wie z.B. Andruckglied 25" ausgebildet, um eine sichere Positionierung der Welle 1" zu erzielen. Es sind aber auch andere Formen denkbar.

## Patentansprüche

1. Vorrichtung zum Befestigen eines Scheibenwischerhebels (3, 3') mit einer Antriebswelle (1, 1'), mit einem Klemmglied (9, 9') zum Verbinden des Hebels (3, 3') mit der Welle (1, 1'),
wobei der Hebel (3, 3') eine Durchgangsöffnung (5, 5') aufweist,
wobei die Welle (1, 1') sich durch die Durchgangsöffnung (5, 5') hindurch erstreckt,
wobei das Klemmglied (9, 9') zwischen der Welle (1, 1') und einem Innenrandbereich (17, 17') einer Ausnehmung (6, 6') des Hebels (3, 3') angeordnet ist,
wobei das Klemmglied (9, 9') ein erstes Ende (13, 13') und ein zweites Ende (15, 15') aufweist,
wobei das Klemmglied (9, 9') derart betätigbar ist, dass es eine erste Position und einen verspannten Zustand annehmen kann,
wobei das Klemmglied (9, 9') im verspannten Zustand in der Ausnehmung (6, 6') angeordnet ist,
**dadurch gekennzeichnet,**
**dass** das zweite Ende (15, 15') des Klemmglieds (9, 9') mit dem Innenrandbereich (17, 17') der Ausnehmung (6, 6') des Hebels (3) gekoppelt ist,
und **dass** in dem verspannten Zustand des Klemmglieds (9, 9') das erste Ende (13, 13') des Klemmglieds (9, 9') in Presskontakt mit der Welle (1, 1') steht und sich das zweite Ende (15, 15') des Klemmglieds (9, 9') am Innenrandbereich (17, 17') der Ausnehmung (6, 6') des Hebels (3, 3') abstützt.

2. Vorrichtung nach Anspruch 1, wobei das erste Ende (13) des Klemmglieds (9) ein erstes Andruckglied (25) umfasst, welches im betätigten Zustand des Klemmglieds (9) in Presskontakt mit der Welle (1) steht.

3. Vorrichtung nach Anspruch 2, wobei das erste Andruckglied (25) eine mit dem Innenrandbereich (17) der Ausnehmung verbundene Exzenter-Achse (27) aufweist, wobei das Klemmglied (9) bei Betätigung das Andruckglied (25) um diese Achse (27) rotiert bis das Andruckglied (25) mit der Welle (1) in Presskontakt steht.

4. Vorrichtung nach einem der vorangehenden Ansprüche, wobei die Welle (1, 1') im Bereich der Verbindung mit dem Klemmglied (9, 9') eine Oberflächenbehandlung (21, 21') aufweist.

5. Vorrichtung nach einem der vorangehenden Ansprüche, wobei das Klemmglied (9, 9', 9") aus einem Metall hergestellt ist.

## Claims

1. Device for fastening a window wiper lever (3, 3') to a drive shaft (1, 1'), with a clamping member (9, 9') for connecting the lever (3, 3') to the shaft (1, 1'),
where the lever (3, 3') has a passage opening (5, 5')
wherein the shaft (1, 1') extends through the passage opening (5, 5'),
wherein the clamping member (9, 9') is arranged between the shaft (1, 1') and an inner edge region (17, 17') of a recess (6, 6') in the lever (3, 3'),
wherein the clamping member (9, 9') has a first end (13, 13') and a second end (15, 15'),
wherein the clamping member (9, 9') can be actuated in such a manner that it can take up a first position and a braced position,
wherein, in the braced state, the clamping member (9, 9') is arranged in the recess (6, 6'),
**characterized in that** the second end (15, 15') of the clamping member (9, 9') is coupled to the inner edge region (17, 17') of the recess (6, 6') of the lever (3),
and **in that**, in the braced state of the clamping member (9, 9'), the first end (13, 13') of the clamping member (9, 9') is in pressing contact with the shaft (1, 1') and the second end (15, 15') of the clamping member (9, 9') is supported on the inner edge region (17, 17') of the recess (6, 6') of the lever (3, 3').

2. Device according to Claim 1, wherein the first end (13) of the clamping member (9) comprises a first press-on member (25) which, in the actuated state of the clamping member (9), is in pressing contact with the shaft (1).

3. Device according to Claim 2, wherein the first press-on member (25) has an eccentric axis (27) connected to the inner edge region (17) of the recess, and wherein the clamping member (9), upon actuation, rotates the press-on member (25) about said axis (27) until the press-on member (25) is in pressing contact with the shaft (1).

4. Device according to one of the preceding claims, wherein the shaft (1, 1') has a surface treatment (21, 21') in the region of the connection to the clamping member (9, 9').

5. Device according to one of the preceding claims, wherein the clamping member (9, 9', 9") is produced from a metal.

## Revendications

1. Dispositif de fixation d'un levier d'essuie-glace (3, 3') comprenant un arbre d'entraînement (1, 1') avec un organe de serrage (9, 9') pour raccorder le levier (3, 3') à l'arbre (1, 1'),
le levier (3, 3') présentant une ouverture de passage (5, 5'),
l'arbre (1, 1') s'étendant à travers l'ouverture de passage (5, 5'),
l'organe de serrage (9, 9') étant disposé entre l'arbre (1, 1') et une région de bord interne (17, 17') d'un évidement (6, 6') du levier (3, 3'), l'organe de serrage (9, 9') présentant une première extrémité (13, 13') et une deuxième extrémité (15, 15'),
l'organe de serrage (9, 9') pouvant être actionné de telle sorte qu'il puisse adopter une première position et un état serré,
l'organe de serrage (9, 9'), dans l'état serré, étant disposé dans l'évidement (6, 6'), **caractérisé en ce que**
la deuxième extrémité (15, 15') de l'organe de serrage (9, 9') est accouplée à la région de bord interne (17, 17') de l'évidement (6, 6') du levier (3),
et **en ce que** dans l'état serré de l'organe de serrage (9, 9'), la première extrémité (13, 13') de l'organe de serrage (9, 9') est en contact de pressage avec l'arbre (1, 1') et la deuxième extrémité (15, 15') de l'organe de serrage (9, 9') s'appuie sur la région de bord interne (17, 17') de l'évidement (6, 6') du levier (3, 3').

2. Dispositif selon la revendication 1, dans lequel la première extrémité (13) de l'organe de serrage (9) comprend un premier organe de pressage (25) qui, dans l'état actionné de l'organe de serrage (9), est en contact de pressage avec l'arbre (1).

3. Dispositif selon la revendication 2, dans lequel le premier organe de pressage (25) présente un axe excentré (27) connecté à la région de bord interne (17) de l'évidement, l'organe de serrage (9), lors de son actionnement, faisant tourner l'organe de pressage (25) autour de cet axe (27) jusqu'à ce que l'organe de pressage (25) soit en contact de pressage avec l'arbre (1).

4. Dispositif selon l'une quelconque des revendications précédentes, dans lequel l'arbre (1, 1') présente un traitement de surface (21, 21') dans la région du raccord avec l'organe de serrage (9, 9').

5. Dispositif selon l'une quelconque des revendications précédentes, dans lequel l'organe de serrage (9, 9', 9") est fabriqué en métal.
